# EUROPEAN PATENT SPECIFICATION

(11) **EP 1 726 459 B1**
(45) Date of publication and mention of the grant of the patent: **24.03.2010**
(21) Application number: 06007409.3
(22) Date of filing: 07.04.2006
(51) Int. Cl.: B60C 15/04, B60C 9/08

(54) **Pneumatic tire**
Luftreifen
Pneumatique

(30) Priority: 24.05.2005 JP 2005151282
(43) Date of publication of application: 29.11.2006
(73) Proprietor: SUMITOMO RUBBER INDUSTRIES, LTD., Kobe-shi, Hyogo-ken (JP)
(72) Inventor: Ishikawa, Genichiro, Chuo-ku Kobe-shi Hyogo-ken (JP); Idei, Mitsushige, Chuo-ku Kobe-shi Hyogo-ken (JP)
(74) Representative: Manitz, Finsterwald & Partner GbR

(56) References cited:
- JP-A- 5 032 106
- JP-A- 5 178 035
- JP-A- 2001 191 752

## Description

The present invention relates to a pneumatic tire comprising a so-called cable bead core as a bead core.

### Description of the Related Art

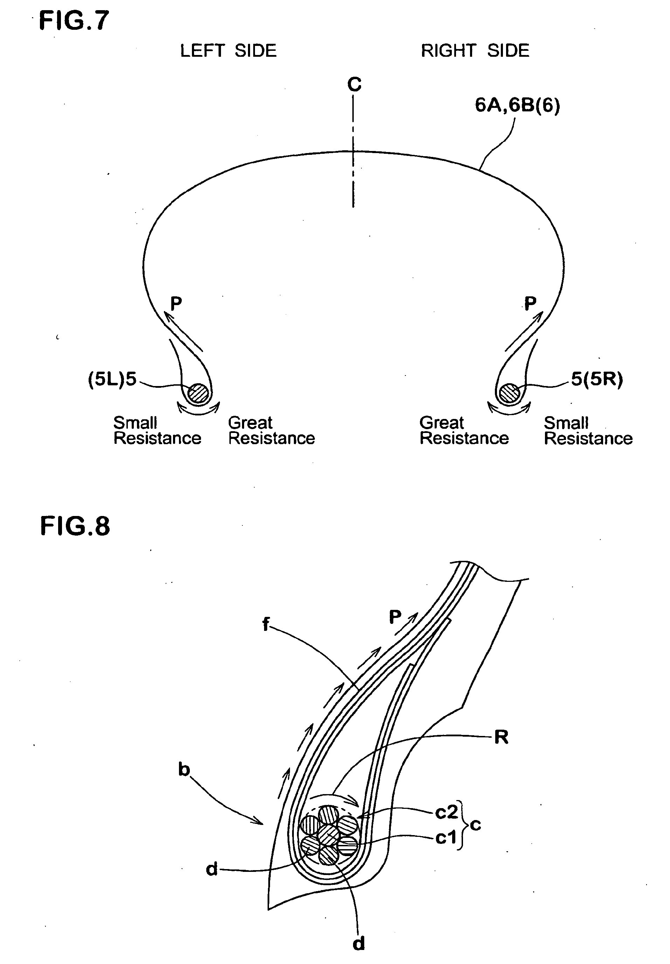

As shown in Fig. 8, there is proposed a pneumatic tire disposed so-called cable bead core c in a bead portion b. The cable bead core c comprises an annular core c1 and a sheath c2 including a plurality of sheath wires d which are helically wound around the annular core c1.

The cable bead core c has feature that relative rotation of the sheath c2 with respect to the core c1 is allowed. For example, cord tension P and a strain or the like of a carcass ply f which is turned up around the cable bead core c are absorbed by the relative rotation of the sheath c2 with respect to the core c1, as shown by arrow R. Therefore, the tire of this kind has a merit that durability and impact absorption property are enhanced.

However, the present inventors researched concerning the cable bead core c, and found that rotation easiness of the sheath c2 with respect to the core c1 had directional property (anisotropy). That is, the inventors found that the rotation easiness of the sheath c2 (simply "rotation resistance" in some cases hereinafter) is varied depending upon a helically direction of the sheath wires d wound around the core c1.

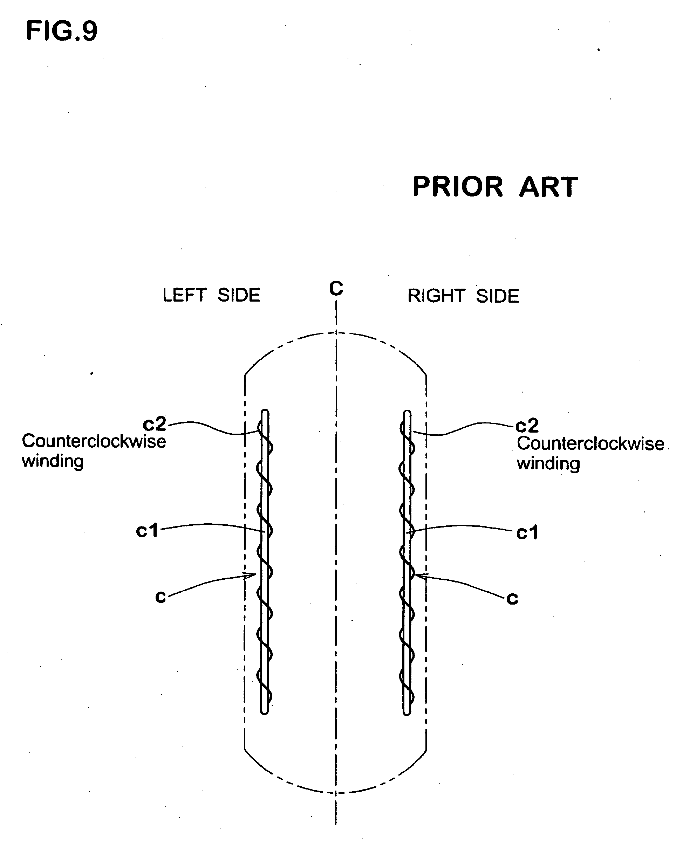

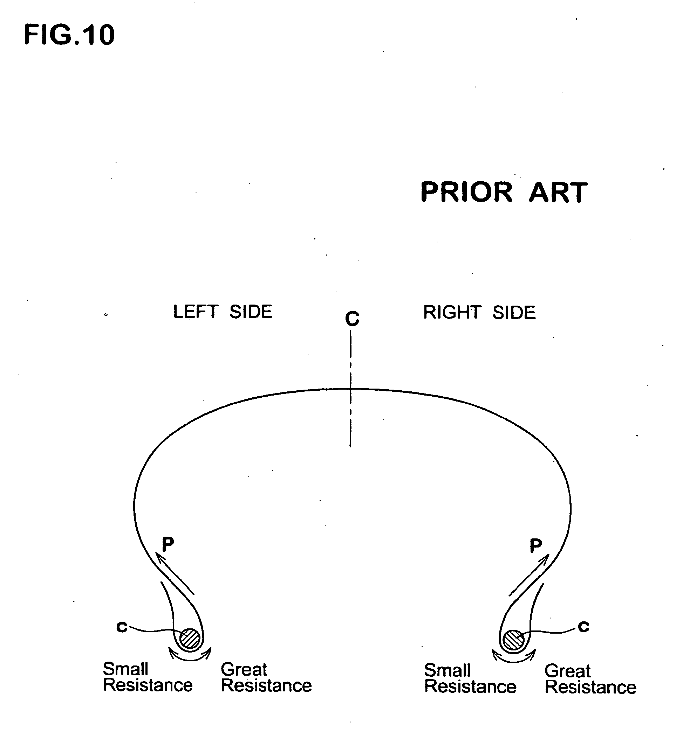

As shown in Fig. 9 for example, when the same cable bead cores c formed by helically winding sheath wires c2 around cores c1 in the same direction (counterclockwise direction in this example) are used as left and right bead portions respectively, the left and right bead portions have rotation resistances of asymmetric bead cores c with respect to a tire equator as schematically shown in Fig. 10.

In the aspect shown in Fig. 10, rotation deformation of the right bead portion with respect to the cord tension P of the carcass ply f is greater than that of the left bead portion, and a difference can be generated in impact absorption property. The rotation resistance of the left and right asymmetric bead cores c give different tensions to the carcass cords extending in the left and right sidewall portions during vulcanization formation of the tire, and varies intermediate elongations of the carcass cords and uniformity. Especially in the case of a pneumatic tire for a motorcycle in which a cornering motion is carried out while laterally inclining its vehicle body, such a left and right asymmetric bead structure deteriorates stability at the time of cornering and this is not preferable.

The closest prior art can be found in JP 2001 191752 A and further background art is found in the documents JP 05 178 035 A and JP 05 032 106 A.

The present invention has been accomplished in view of the above circumstances, and it is a main object of the invention to provide a pneumatic tire capable of enhancing various tire performances by symmetrically exhibiting rotation resistances of a sheath on left and right bead portions.

According to the present invention, there is disclosed a pneumatic motorcycle tire in accordance with claim 1.

### BRIEF DESCRIPTION OF THE DRAWINGS

Fig. 1 is a sectional view showing an embodiment of a pneumatic tire of the present invention;
Fig. 2 is a partial perspective view of a bead core of the pneumatic tire;
Fig. 3 is an enlarged sectional view taken along the line A-A in Fig. 2;
Fig. 4 is a perspective plan view of the pneumatic tire for showing bead cores;
Fig. 5 is a schematic sectional view of the pneumatic tire;
Fig. 6 is a perspective plan view of another pneumatic tire for showing bead cores;
Fig. 7 is a schematic sectional view of the pneumatic tire;
Fig. 8 is a sectional view of a bead portion of the pneumatic tire;
Fig. 9 is a perspective plan view of a conventional pneumatic tire for showing bead cores; and
Fig. 10 is a schematic sectional view of the pneumatic tire shown in Fig. 9.

### DETAILED DESCRIPTION OF THE PREFERRED EMBODIMENTS

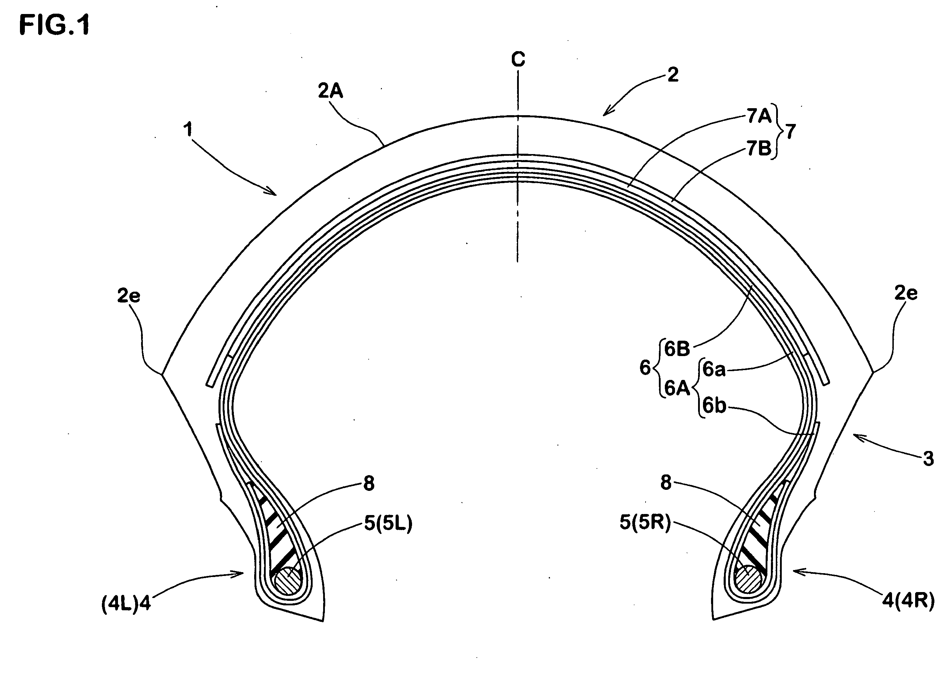

In the drawings, tire 1 according to the present invention is for a motorcycle. In FIG. 1, the tire 1 in accordance with present invention comprises: a tread portion 2; a pair of sidewall portions 3; a pair of axially spaced bead portions 4 each with a bead core 5 therein; a carcass 6 extending between the bead cores 5; and a belt 7 disposed radially outside the carcass 6 in the tread portion 2.

The tread portion 2 includes: a pair of tread edges 2e each being provided at axially outermost position of the tire; and a contact surface 2A contacting with a road between the tread edges 2e. The contact surface 2A is curved by a relatively small radius of curvature so as to protrude radially outwardly in a tire section including a tire axis.

The carcass 6 comprises at least one ply of cords inclined at angle of from 65 to 90 degrees with respect to the tire equator C. In this embodiment, the carcass 6 comprises two plies 6A and 6B. For the carcass cords, organic fiber cords, e.g. aromatic polyamide, polyester, rayon, nylon and the like can be suitably used. However, steel cords may be used.

Each carcass ply 6A and 6B extends between bead portions 4 and turned up around the bead core 5 in each bead portion from the axially inside to the outside of the tire so as to form a pair of turnup portions 6b and a main portion 6a therebetween. A rubber bead apex 8 extending and tapering from the bead core 5 is disposed between the main portion 6a and the turnup portion 6b in each bead portion 4.

In this embodiment, the belt 7 comprises two cross belt plies 7A and 7B of parallel cords laid at an angle of from 15 to 30 degrees with respect to the tire equator C. For the belt cords, steel cords, and high modulus organic fiber cords such as aramid, rayon and like can be used. Also, the belt 7 may be composed of one belt ply. Further, the belt 7 can be made of a jointless belt by winding at least one cord or parallel cords spirally on the carcass 6.

In order to further improve the high-speed durability of the belt 7, a band which covers with the belt 7 and has cords with an angle of not more than 5 degrees with respect to the tire equator can be disposed radially outside the belt 7 (not shown).

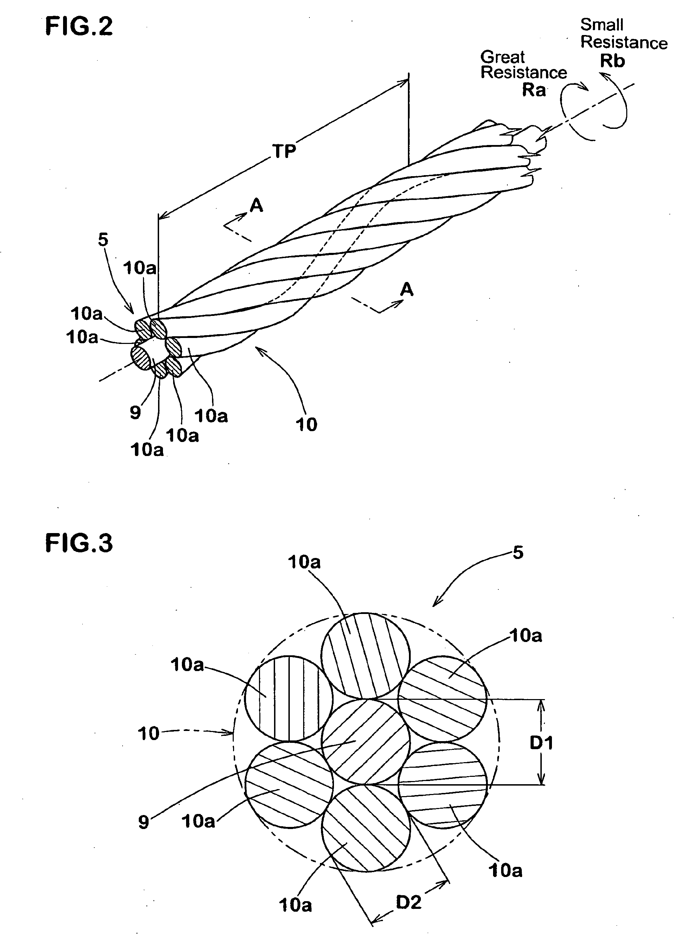

In Figs. 2 and 3, the bead core 5 comprises an annular core 9, and at least one sheath 10 surrounding the annular core 9 and including a plurality of sheath wires 10a extending helically around the annular core 9 so as to form a so-called cable bead core. In this embodiment, the bead core 5 has a cord structure of "1x1.5+6x1.4". The cord structure "1x1.5+6x1.4" means that the annular core 9 is made up of one wire having the diameter of 1.5 mm and one sheath 10 is made up of six sheath wires 10a each having the diameter of 1.4 mm.

As for the annular core 9, a monofilament is preferably used. The annular core 9 may be made of synthetic resin material or metal material, and a steel wire is preferably used. Among them, in view of strength, steel wire with carbon content of from 0.1 to 0.9 % by weight is preferable.

A diameter D1 of the annular core 9 is appropriately determined in accordance with size, category and the like of a tire, but if the diameter is excessively small, the strength of the bead core 5 is deteriorated, and if the diameter D1 is excessively large, the weight of the bead core is increased and outer diameter of the bead core 5 is increased. From such a point of view, the diameter D1 of the annular core 9 is preferably not less than 1.0 mm, and more preferably not less than 1.2 mm, the upper limit of the diameter D1 is not more than 2.2 mm, and more preferably not more than 2.0 mm.

As for the sheath wire 10a, a multi-filament or (preferably) a monofilament is used, and synthetic resin material or metal material is used for example. Preferable material of the monofilament is metal, and steel wire is especially preferable. Among them, hard materials such as piano wire defined in JIS G3502, and hard steel wire defined in JIS G3506 are especially preferable. Hard steel wire with carbon contents of 0.65 to 0.88 % by weight is especially preferable for the sheath wire 10a.

A diameter D2 of the sheath wire 10a is not especially limited, but if it is excessively small, the strength of the bead core 5 tends to be deteriorated, and if the diameter D2 is excessively large, the weight of the tire and the diameter of the bead core 5 are increased. From such a view point, the diameter D2 of the sheath wire 10a is preferably not less than 0.9 mm and more preferably not less than 1.3 mm, the upper limit is preferably not more than 1.8 mm, and more preferably not more than 1.6 mm.

A relation of the diameter D1 of the annular core 9 and the diameter D2 of the sheath wire 10a may be defined freely. However, if the ratio (D2/D1) becomes small, the number of the sheath wires 10a is extremely increased, the rigidity of the bead core is increased, and there is an adverse possibility that large tension is given to the carcass ply. This limits slide movement of the carcass ply at the time of vulcanization and thus, elasticity may be deteriorated. If the ratio (D2/D1) becomes large, the number of sheath wires 10a is reduced, the strength of the bead core 5 tends to be lowered. From such a point of view, the ratio (D2/D1) is preferably not less than 0.5, more preferably not less than 0.7, and its upper limit is preferably not more than 2.0, and more preferably not more than 1.5.

The number of the sheath wires 10a included in one layer of sheath 10 is appropriately determined in accordance with a relation or the like between the diameter of the sheath wire 10a and the spiral pitch TP at the time of winding. For example, in the case of a tire for a motorcycle, the number of sheath wires is preferably not less than 5, more preferably not less than 6, preferably not more than 13, more preferably not more than 10 and more preferably not more than 9. In this embodiment, each sheath wire 10a contacts with the other wires in both sides.

It is preferable that a surface of the annular core 9 and/or sheath wire 10a is plated with various materials (e.g., brass plating, bronze plating or zinc plating) in view of adhesion with respect to rubber and the like.

As described above, in the case of a cable bead type bead core 5, the sheath 10 relatively rotates around the annular core 9, but easiness of rotation of the sheath 10 has directional property. As shown in Fig. 2, the sheath 10 shows a large resistance with respect to rotation Ra in a direction in which the sheath wires 10a wound around the annular core 9 are helically wound (i.e., in a direction in which the sheath wires 10a are further wound), and the sheath 10 shows only a relatively small resistance with respect to rotation Rb in a direction in which the sheath wires 10a are loosened (i.e., in a direction in which the sheath wires 10a are untied).

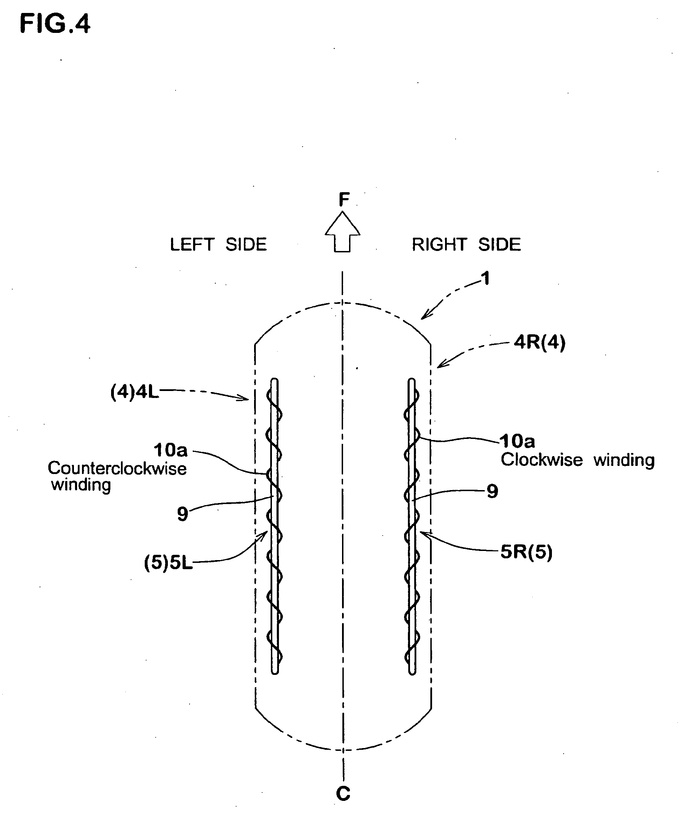

In this invention, as shown in Fig. 4, a helical direction of the sheath wire 10a of the bead core 5R disposed in the one bead portion 4R, and a helical direction of the sheath wire 10a of the bead core 5L disposed in the other bead portion 4L are reverse each other. This prevents the rotation directional property of the sheath 10 from affecting various performances of the pneumatic tire.

The helical direction of the sheath wire 10a is determined based on the rotation direction when the sheath wires 10a are helically wound around the annular core 9. The winding of the sheath wire 10a around the core 9 in the clockwise direction is called the clockwise winding, and the winding thereof in the counterclockwise direction is called counterclockwise winding. In other words, the clockwise winding is "Z winding" defined in JISG3510 or JISL1017, and the counterclockwise winding is "S winding" defined in JIS.

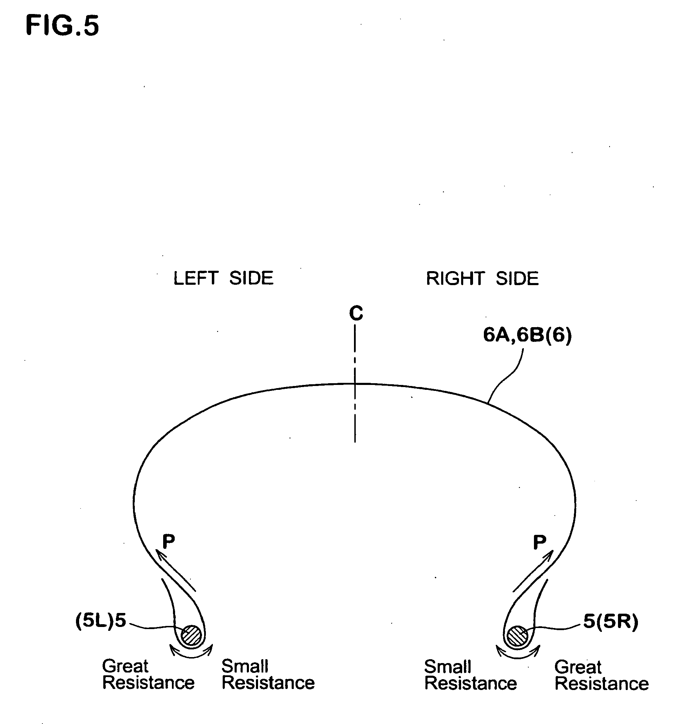

Fig. 4 is a perspective plan view of the pneumatic tire 1 for showing bead cores 5 as viewed from above. In this embodiment, the sheath wire 10a of the right bead core 5R is wound in the clockwise direction, and the sheath wire 10a of the left bead core 5L is wound in the counterclockwise direction. The bead cores 5L and 5R are substantially the same except the helical directions of the sheath wires. Fig. 5 is a schematic sectional view of such a pneumatic tire 1. In the pneumatic tire of this embodiment, the right and left bead cores 5R and 5L are substantially symmetric with respect to the rotational direction in which the sheath is pulled by tension P of the cords of the carcass plies 6A and 6B such that the rotation resistance of the sheath 10 is small. Therefore, in left and right bead portions, the rotation resistances of the sheaths 10 can be reduced at the same level. This is effective for enhancing the vibration absorption property at the time of running.

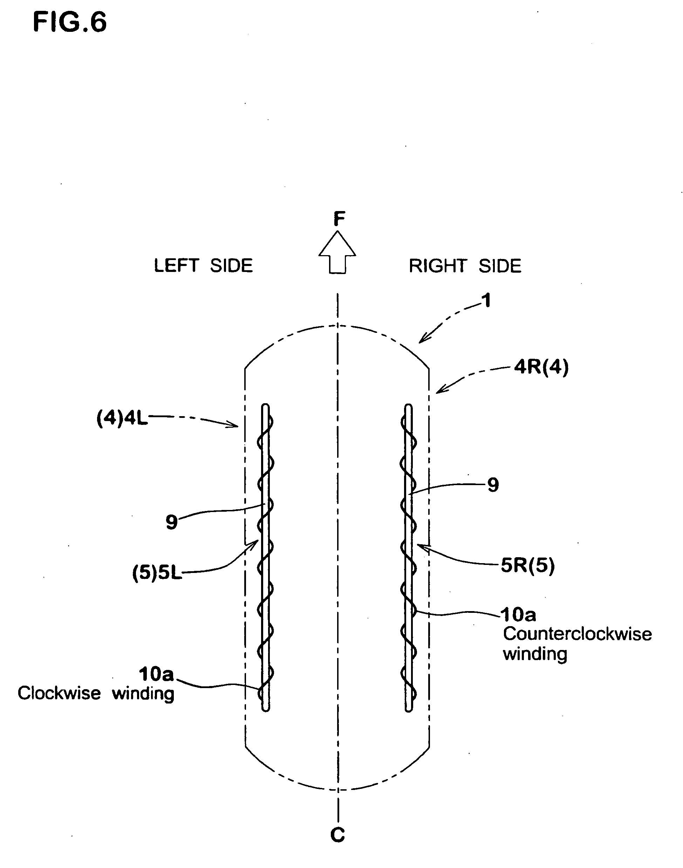

Fig. 6 is a perspective plan view of the pneumatic tire 1 for showing the bead cores 5 as viewed from above. In this embodiment, sheath wires 10a of a right bead core 5R extend helically in the counterclockwise direction and sheath wires 10a of the left bead core 5L extend in the clockwise direction. Fig. 7 is a schematic sectional view of such a pneumatic tire 1. In the pneumatic tire 1 of this embodiment, the right and left bead cores 5R and 5L are disposed symmetrically with respect to the rotational direction in which sheath is pulled by tension P of the cords of the carcass plies 6A and 6B such that the rotation resistance of the sheath 10 is great. Therefore, it becomes difficult to rotate the sheath 10 with respect to the cord tension P and thus, it is possible to provide a pneumatic tire 1 in which bead and sidewall rigidities are high, and steering stability is excellent.

In the pneumatic tires of any of the embodiments shown in Figs. 4 and 6, the rotation resistances of the sheaths 10 in the bead cores 5 are laterally symmetric. Thus, tension of the left and right carcass cords extending through each sidewall portion 3 can be substantially equal during vulcanization of the tire. Therefore, after the vulcanization formation, the path lengths of left and right carcass cords become substantially equal to each other, and a difference in intermediate elongations of the left and right carcass cords can be reduced. In the case of a motorcycle tire, the same cornering operability and impact absorption property and the like can be exhibited in any of the left and right cornering directions. Thus, the motorcycle can stably run in both left and right cornering operations. Such a pneumatic tire has high uniformity and excellent steering stability.

Concerning the pneumatic tires 1 in Figs. 4 and 6, the one way rotational (running) direction "F" can be designated. Such a pneumatic tire 1 has a tread pattern whose tread groove function is varied depending upon the rotational direction.

As shown in Fig. 4 for example, it is possible to provide a pneumatic tire 1 in which when the tire runs in accordance with the designated rotational direction F, the sheath wires 10a of the right bead core 5R are wound in the clockwise direction of the rotational direction F, and the sheath wires 10a of the left bead core 5L are wound in the counterclockwise direction of the rotational direction F. According to such a pneumatic tire 1, as shown in Fig. 5, the bead cores 5L and 5R can maintain rotation resistances of the sheaths 10 with respect to the tension P of the cords at a small level and as a result, excellent impact absorption property can be exhibited.

On the other hand, as shown in Fig. 6, it is possible to provide a pneumatic tire 1 in which when the tire rotates in accordance with the designated rotation direction F, the sheath wires 10a of the right bead core are wound in the counterclockwise direction of the rotational direction F, and the sheath wires 10a of the left bead core 5L are wound in the clockwise direction of the rotational direction F. According to such a pneumatic tire 1, as shown in Fig. 7, the bead cores 5L and 5R can maintain rotation resistances of the sheaths 10 with respect to the tension P of the cords at a large level and as a result, the bead portion 4 can have high rigidity and steering stability is excellent.

The tension P of the carcass cord which tries to rotate the sheath 10 of the bead core 5 becomes greater as the angle of the carcass cord with respect to the tire equator C is close to 90°. Therefore, the pneumatic tire of the present invention exhibits especially remarkable effect when the angle of the carcass cord is not less than 75 degrees, and more preferably not less than 85 degrees.

In the embodiment, the sheath 10 is composed of one layer, but the number of layer of the sheath 10 may be not less than two in accordance with required tire performance. In this case, the sheath wires 10a of each layer may be wound helically in the reverse direction between the left and right bead cores 5L and 5R. In that case, materials and/or diameters of sheath wires 10a may be different in each layer of the sheaths 10.

The present invention is not limited to a pneumatic tire for an illustrated motorcycle, and the invention can be applied to various tires only if cable bead type bead core is used, such as a heavy load tire, a small truck tire, a motorcycle tire, an aircraft tire. Although especially preferable embodiments of the present invention have been described in detail, the invention is not limited to the illustrated embodiments, and the invention can be deformed in various modes and carried out.

### Comparison Test

Pneumatic tires (size: 120/70ZR17) for a motorcycle with bead cores including the basic structure shown in Fig. 1 and Table 1 in which rotational direction was designated were prototyped, tire uniformity, intermediate elongation of the carcass cord and steering stability were tested. In the tires, common specifications are as follows:
Bead core structure: 1×1.5+6×1.4 (Fig. 3)
Helical pitch of sheath wire: about 150 mm
carcass cord: nylon
The number of carcass plies: 2
Angle of carcass cord (with respect to tire equator): 90°
Belt cord: aramid
The number of belt plies: 2
Angle of belt cord (with respect to tire equator): 19°

Test method is as follows:

### uniformity:

using a uniformity tester, RFV (n = average value of 10) of each of the test tires was measured under the following measuring conditions. A result thereof is indicted with indices while defining a reference 1 as 100. The smaller the numeric value is, the more excellent the result is.
Rim: MT3.50x17
Internal pressure: 200 kPa
vertical load: 1.45 kN
Speed: 6.6 km/h
Difference in intermediate elongation between left and right carcass cords:

Ten tires were produced for each of references 1 and 2 and examples 1 and 2 of the present invention. Next, ten carcass cords were cut out from left and right sidewall portions of each tire at substantially equal distances from one another in the circumferential direction of the tire, and intermediate elongation thereof was measured (n = average value of 10). The intermediate elongation (%) is defined as elongation at the time of given load measured based on "7.7.1 standard state" of "7.7 given load elongation" of "JIS L1017 chemical fiber tire cord testing method".

Next, a difference in intermediate elongation between the left and right carcass cords was obtained, and a result thereof was indicated with indices while defining the difference of a reference 1 as 100. As the numeric value is smaller, the difference in the intermediate elongation of the left and right carcass cords is small, i.e., the result is more excellent. Steering stability:

After the prototyped tires were mounted on rims (MT3.50×17), internal pressure of 250 kPa was inflated into each tire, and the tire was mounted on a front wheel of a motorcycle with a displacement of 1,000 cc. One driver rode on the motorcycle, the driver drove the motorcycle on a test course, and evaluated stability at the time of straightly running, and impact absorption property at the time of left and right cornering. Concerning the impact absorption property at the time of cornering, impact absorption property was measured when cornering running on a special test course on which projections (height of 5 mm, and length of 40 mm) were provided at distances of 10 m from one another at the speed of 60 to 80 km/h. The evaluation was made on a scale from 1 to 10 by a driver's sensory evaluation. The greater the numeric value is, the more excellent the result is. Conventional tires of 190/50ZR17 (rim: MT6.00×17, internal pressure of 290 kPa) were mounted on a rear wheel of the motorcycle.

Test results are shown in Table 1.

**Table 1**

| | | Ref.1 | Ref.2 | Ex. 1 | Ex. 2 |
|---|---|---|---|---|---|
| Helical direction of sheath wires of right bead core | | Clockwise direction | Counterclockwise direction | Clockwise direction | Counterclockwise direction |
| Helical direction of sheath wires of left bead core | | Clockwise direction | Counterclockwise direction | Counterclockwise direction | Clockwise direction |
| Result of test | Uniformity (indices) | 100 | 99 | 94 | 95 |
| | Difference in intermediate elongation of left and right carcass cords (indices) | 100 | 100 | 93 | 94 |
| | Straight running stability (on a scale from 1 to 10) | 6.5 | 6.5 | 7.0 | 7.0 |
| | Vibration absorption Property of left cornering (on a scale from 1 to 10) | 6.9 | 6.5 | 7.0 | 6.7 |
| | Vibration absorption property of right from cornering (on a scale from 1 to 10) | 6.6 | 7.0 | 7.1 | 6.7 |
| | Difference of vibration absorption property at the time of left and right cornering | 0.3 | 0.5 | 0.1 | 0 |

As a result of the test, it was confirmed that in the tires of the examples of the present invention, uniformity was enhanced, a difference in performance at the time of left and right cornering was extremely small, and steering stability was excellent.

## Claims

1. A pneumatic motorcycle tire (1) having a rotational direction which is designed as one way, the tire comprising
a tread portion (2),
a pair of sidewall portions (3),
a pair of bead portions (4),
a pair of bead cores (5) each being disposed in the bead portion, said each bead core (5) comprising
an annular core (9) extending in the tire circumferential direction and
a sheath (10) including a plurality of sheath wires (10a) each extending helically around the annular core (9),
a carcass (6) comprising a carcass ply (6A, 6B) extending between the bead portions (4) and turned up around the bead core (5) in each bead portion (4),
wherein in a plan view of the pneumatic motorcycle tire 1, the bead core (5) comprises
a right bead core (5R) arranged on the right side of the rotational direction and a left bead core (5L) arranged on the left side of the rotational direction,
each of the sheath wires (10a) of the right bead core (5R) extends helically with clockwise direction around the annular core (9) toward the rotational direction, and
each of the sheath wires (10a) of the left bead core (5L) extends helically with counterclockwise direction around the annular core (9) toward the direction of rotation.

2. The pneumatic motorcycle tire (1) according to claim 1, wherein the carcass ply (6A, 68) comprises cords inclined at an angle of from 65 to 90 degrees with respect to the tire equator.

3. The pneumatic motorcycle tire (1) according to claim 1, wherein the sheath (10) is composed of one layer comprising from 5 to 13 sheath wires (10a).

## Patentansprüche

1. Motorradluftreifen (1), der hinsichtlich seiner Drehrichtung laufrichtungsgebunden ausgelegt ist, wobei der Reifen umfasst
einen Laufflächenabschnitt (2),
ein Paar Seitenwandabschnitte (3),
ein Paar Wulstabschnitte (4),
ein Paar Wulstkerne (5), die jeweils in dem Wulstabschnitt angeordnet sind, wobei jeder Wulstkern (5)
einen ringförmigen Kern (9), der sich in der Umfangsrichtung des Reifens erstreckt, und
eine Ummantelung (10) umfasst, die eine Mehrzahl von Ummantelungsdrähten (10a) enthält, die sich jeweils wendelförmig um den ringförmigen Kern (9) herum erstrecken,
eine Karkasse (6), die eine Karkasslage (6A, 6B) umfasst, die sich zwischen den Wulstabschnitten (4) erstreckt und um den Wulstkern (5) in jedem Wulstabschnitt (4) umgeschlagen ist,
wobei in einer Draufsicht des Motorradluftreifens 1 der Wulstkern (5)
einen rechten Wulstkern (5R), der auf der rechten Seite der Drehrichtung angeordnet ist, und einen linken Wulstkern (5L) umfasst, der auf der linken Seite der Drehrichtung angeordnet ist,
wobei jeder der Ummantelungsdrähte (10a) des rechten Wulstkerns (5R) sich wendelförmig in der Uhrzeigerrichtung um den ringförmigen Kern (9) zur Drehrichtung hin erstreckt, und
jeder der Ummantelungsdrähte (10a) des linken Wulstkerns (5L) sich wendelförmig in der Gegenuhrzeigerrichtung um den ringförmigen Kern (9) herum zur Drehrichtung hin erstreckt.

2. Motorradluftreifen (1) nach Anspruch 1,
wobei die Karkasslage (6A ,6B) Korde umfasst, die unter einem Winkel von 65 bis 90 Grad mit Bezug zu dem Reifenäquator geneigt sind.

3. Motorradluftreifen (1) nach Anspruch 1,
wobei die Ummantelung (10) aus einer Schicht besteht, die 5 bis 13 Ummantelungsdrähte (10a) umfasst.

## Revendications

1. Bandage pneumatique de motocyclette (1) ayant une direction de rotation conçue de façon unidirectionnelle, le bandage comprenant :
une portion formant bande de roulement (2),
une paire de portions de parois latérales (3),
une paire de portions de talons (4),
une paire d'âmes de talons (5), disposée chacune dans la portion de talon, chacune desdites âmes de talons (5) comprenant
une âme annulaire (9) qui s'étend dans la direction circonférentielle du bandage, et
une gaine (10) incluant une pluralité de fils de gaine (10a) s'étendant chacun en hélice autour de l'âme annulaire (9),
une carcasse (6) comprenant une nappe de carcasse (6A, 6B) s'étendant entre les portions de talons (4) et rabattue vers le haut autour de l'âme de talon (5) dans chaque portion de talon (4),
dans lequel, dans une vue en plan du bandage pneumatique de motocyclette (1), l'âme de talon (5) comprend
une âme de talon à droite (5R) agencée sur le côté droit de la direction de rotation, et une âme de talon à gauche (5L) agencée sur le côté gauche de la direction de rotation,
chacun des fils de gaine (10a) de l'âme de talon à droite (5R) s'étend en hélice dans le sens des aiguilles d'une montre autour de l'âme annulaire (9) vers la direction de rotation, et
chacun des fils de gaine (10a) de l'âme de talon à gauche (5L) s'étend en hélice dans le sens inverse aux aiguilles d'une montre autour de l'âme annulaire (9) vers la direction de rotation.

2. Bandage pneumatique de motocyclette (1) selon la revendication 1, dans lequel la nappe de carcasse (6A, 6B) comprend des câblés inclinés sous un angle de 65 à 90° par rapport à l'équateur du bandage.

3. Bandage pneumatique de motocyclette (1) selon la revendication 1, dans lequel la gaine (10) est composée d'une couche comprenant de 5 à 13 fils de gaine (10a).
